# EUROPEAN PATENT SPECIFICATION

(11) **EP 3 442 329 B1**
(45) Date of publication and mention of the grant of the patent: **30.09.2020**
(21) Application number: 17718434.8
(22) Date of filing: 04.04.2017
(51) Int. Cl.: A01K 1/01

(54) **A SELF-PROPELLED ANIMAL-SHED VEHICLE FOR CLEANING THE FLOOR OF AN ANIMAL SHED**
SELBSTANGETRIEBENES FAHRZEUG ZUM REINIGEN DES BODENS EINER TIER UNTERKUNFT
VÉHICULE AUTOMOTEUR POUR NETTOYER LE SOL D'UN BATIMENT D'ÉLEVAGE

(30) Priority: 15.04.2016 NL 2016619
(43) Date of publication of application: 20.02.2019
(73) Proprietor: Lely Patent N.V., 3147 PB Maassluis (NL)
(72) Inventor: VAN DEN BERG, Karel, 3147 PB Maassluis (NL); PASTOOR, Jan Lambertus, 3147 PB Maassluis (NL); HUYZER, Arie, 3147 PB Maassluis (NL); STAPEL, Roelof, 3147 PB Maassluis (NL); BLOKLAND, Korstiaan Cornelis, 3147 PB Maassluis (NL)
(74) Representative: Octrooibureau Van der Lely N.V.
(86) International application number: PCT/NL2017/050208
(87) International publication number: WO 2017/179971

(56) References cited:
- WO-A1-2013/010785
- WO-A1-2016/036240
- US-A- 5 460 657
- US-A- 5 561 921

## Description

Proper animal keeping includes not only to provide good housing for the animals, but also to keep the animal housing clean. Many solutions have been provided for cleaning shed floors, some of which relate to self-propelled vehicles.

Self-propelled animal-shed vehicles for cleaning animal shed floors are known in the art.

For example, EP1100317 describes an unmanned vehicle for displacing manure having two wheels and a manure pusher resting on the floor. Typically this vehicle is used in sheds with a so-called slatted floor with spaces between the slats and a manure cellar below the floor. The vehicle is designed to move around in the shed with a manure pusher resting on the floor. The effect being that manure is displaced and pushed through the spaces between the floor slats and falls into the manure cellar.

Other self-propelled vehicles known in the art which will actually remove manure from a floor are described in WO2014051421 having a rotating, continuous manure pick-up belt in contact with the floor to pick up manure, in WO2013010785 collecting material from the floor by means of scraping and subsequently sucking the material up into a tank and by EP2594129 scooping waste up from the floor into a tank.

Even though each of these vehicles are capable of cleaning the stable floor, emission of harmful substances, in particular ammonia, still occurs.

US5561921 discloses a vehicle for removing fluids like snow from a surface comprising a cylindrical brush for sweping a first portion of fluids onto a transport elevator with a belt mounted on rollers. The elevator moves snow and slush upwardly to discharge it into a first container. The first container comprises a mesh filter to filter out debris from melted snow and fluids. A second container maintained at less than atmospheric pressure is provided for collecting residual fluids remaining on the surface after said first portion has been removed.

US5460657 discloses a truck for removal of liquid disposed upon a road surface, A rotatable brush is provided for sweeping solid and liquid materials onto a conveyor pan and further transported by a squeegee conveyor to a storage hopper. Additionally, waste liquid can be removed from the surface by means of vacuum WO2016/036240 A1 discloses a vehicle for the maintenance of a floor covering material.

It is thus an object of the invention to provide a self-propelled animal-shed vehicle arranged to effectuate a better cleaning of the floor such that less material remains on the floor and thereby reducing the emission of ammonia.

This object is realized by providing a self-propelled animal-shed vehicle for cleaning a shed floor according to claim 1.

The vehicle is an unmanned, autonomous self propelled vehicle in which case a driver is no longer needed. Autonomous means that the vehicle is provided with suitable means to operate and drive around in the stable autonomously. This means that the vehicle is provided with suitable navigation means, e.g. an indoor gps-system or with suitable vehicle position sensors. Such features are well known in the art of autonomous vehicle which operate in an animal housing.

By providing a vehicle with separate devices to remove solid and/or semi solid material and liquid from the animal shed floor, the vehicle is better suited to clean the shed floor, since each of the devices has a dedicated task and no compromises in design are necessary. This results in an overall better cleaning of the floor. By being able to better clean the floor the emission in the form of ammonia from the floor is also reduced, after all there will remain less resources on the floor which when in contact with each other produce ammonia, i.e. less manure and urine will be on the floor in contact with each other.

A further advantage of placing the material removing device in front of the liquid removing device, is that the liquid removing device can be designed as a relatively simple device. After all, there will be no need to prevent (semi)solid materials from blocking, soiling or otherwise hindering the liquid removing device to collect the liquid from the floor because these will have been removed by the material removing device. Thus protective devices such as sieves or guards or the like are not necessary.

In use the vehicle will move around in the shed and the material removing device in the front will encounter any (semi)solid materials present on the floor and remove those materials from the floor, directly followed by the liquid removing device which will remove any liquid present on the floor from it. Note that the intended direction of movement is preferably a generally forward movement, not excluding turning corners.

The term solid and/or semi solid is meant to include material which has a certain viscosity causing the material when entered into a container not spontaneously mix and/or blend together with other (semi)solid material present in the container. The (semi)-solid materials in a container may however, under the influence of shocks and vibrations caused by the vehicle, settle in the container to an overall bulk. The term (semi) solid material includes animal excrements that are not in liquid form and are not urine but may include urine. It includes, but is not limited to typical cow droppings (cowpats) which may have medium porridge like consistency. More general it includes material such as non-liquid excrements, which may also be described as feces, droppings, cowpats, dung, muck, fecal matter or the like, and which will generally comprise undigested fibers.

The term liquid is meant to describe liquids which when entered into a container will, flow out and take on the shape of the container and present a level surface. Thus this includes urine which may include some pollution by solids from manure as long as it behaves as a liquid. It may also include water or other liquids present on the floor, such as may be present after hosing down a floor with water or with water with detergent or the like.

The vehicle further comprises at least one press, being a solid-liquid separator, in particular a press, to separate the solid and/or semi-solid material removed from the floor by the material removing device into manure fiber and sludge.

A solid-liquid separator on the vehicle is advantageous because the picked-up manure can be separated into two material streams on the vehicle, thus without requiring a journey to a vehicle station where the material is to be an unloaded in order to be processed. The manure is separated into manure fiber and sludge. Sludge is mainly liquid but includes solids not removed by the separator. Manure fiber is pressed out manure and contains undigested fiber from the feed of the animals. Manure fiber can be used as bedding material. The sludge contains valuable phosphate and may be used as raw material for fertilizer.

The press can be a roller press of two counter rotating rollers, one of the rollers may be perforated and the other may be roller to provide pressure to the perforated roller. The sludge may be captured in the inner space of the perforated roller. However, an auger or screw press may also be used, in which case the screw or auger is inside a screen or filter housing and the screw or auger presses the material against the screen or filter. Preferably the material is fed to the separator from the first container, which ensures a regular feed to the separator. Although it is possible to feed the separator directly from the material removing device without an intermediate container, this is not preferred.

According to a practical embodiment of the invention the material removing device comprises a material loading end to pick up material from the floor wherein the material loading end is provided with a liquid passage, in particular with a plurality of liquid passages provided spaced apart along the width of the material loading end.

By providing a material loading end with a liquid passage, the liquid can pass the material loading end in order to be removed from the floor by the liquid removing device. Thus the material loading end may even be in contact with the stable floor because the liquid passages will allow the liquid to pass to the rear of the material loading device and thus be available to be picked up by the liquid removing device.

By providing a loading end provided with a plurality of spaced apart liquid passages along the width of the material loading end, a more effective liquid passage is possible while allowing for a strong and durable loading end. A particular embodiment of the material loading end may be a curved or angled blade provided a plurality of spaced apart liquid passages. The curved or angled blade will have a bottom portion touching the ground which when the vehicle moves forward will engage material present on the stable floor, and an upward angled or curved rear wall portion which is not in contact with the floor. The bottom portion includes a leading edge, which may be upwardly angled. The liquid passages preferably are through slots spanning the bottom portion and at least a portion of the rear wall portion. The rear wall portion including a closed portion above the liquid passages. The slots may taper with the narrow end in the rear wall portion. When viewed from in the intended direction of travel the upward angled or curved wall is downstream from the bottom portion and not touching the ground. Thus the liquid passages extend upward from the bottom portion which is on the stable floor to allow liquid to pass through.

According to a further embodiment of the invention comprises a material loading end to pick up material from the floor wherein the material loading end is positioned at a predetermined height from the floor.

By positioning the material loading end at a height from the floor, i.e. not touching the floor, the machine has less friction with the floor and less wear of the material removing means. By providing the space between the material loading end and the floor, in use when the vehicle moves the material loading end will pass over any liquid on the floor and leave it undisturbed. The liquid thus passed by can be removed by the liquid removing device. The height to the floor is adjustable and chosen such that solid and/or semi-solid material is still effectively being picked-up from the floor. A proper height will depend on the type of manure which is related to the type of animals kept in the stable. It can be imagined that goat manure and cow manure, which are quite different in shape and consistency will require a different predetermined height of the loading end to the floor. A proper height can be determined in a simple test by using the device and determining at which height to the floor the (semi) solids are effectively removed while the material removing means device allows urine (liquid) to pass underneath it. Such a test can e.g. be done at the first use of the vehicle in a particular stable by the person installing the device, the height can thus be adjusted to the outcome of the test.

Even though the type of manure can be taken into account in order to find a height where it is still efficiently removed from the floor, there can be a general practical minimum predetermined height which is not dependent on the type of manure. After all, since it is desired that the liquid will pass underneath loading end, the loading end should not be allowed to act as a seal to the floor. Thus in an advantageous embodiment, the predetermined height is a minimum height in the range 0,1 mm to 15 mm above the floor.

According to a further embodiment the material removing device includes a driven conveyor system comprising a material loading end and a material unloading end, wherein the conveyor system is sloping from the material loading end to the material unloading end at an acute angle, in particular an angle in the range 15-90 degrees, more in particular in the range 45-90 degrees.

By using a driven conveyor system to pick-up the material form the floor and convey it to an unloading end, the manure can be picked-up and transported to a container or processing device on the vehicle remote from the pick-up end. This makes is possible to have different configurations of the vehicle, and allow a choice of position of the container or processing device. The angle chosen will of course have consequences for the vehicle size and shape. The term driven conveyor system is used in its conventional meaning, i.e. any type of conveyor which moves a product from one location to another location. Such as e.g. a typical belt conveyor (conveyor belt), roller conveyor, flight and/or scraper conveyor or the like.

According to a further practical feature the material loading end includes a set of counter rotatable rollers spaced from each other with a predetermined distance to pick up the material from the floor.

By providing the set of counter rotatable rollers spaced from each other with a predetermined distance to pick up the material from the floor, the material is not only picked up but also wrung out to a certain extent. At least some liquid is removed by passing between the rollers. As a result the material conveyed to the unloading end of the conveying system is dryer and lighter in weight, also less volume needs to be conveyed. Also the conveyor system can be at a steeper angle than without the rollers at the loading end. After all the pressed-out material will better adhere to the conveying means then slippery wet material, since it is somewhat drier.

According to a further practical feature the conveyor system comprises a conveyor belt drivable to rotate around a pair reversing top and bottom rollers in a conveying direction.

By using a conveyor belt system the belt may act as a support for the picked-up material. A conveyor belt system is easy to install and operate, and cheap.

In a further practical feature the conveyor belt is provided with grooves in the length direction of the conveying direction of the belt. The effect of the grooves in that such a belt even when in (inadvertent) contact with the floor, liquid present on the floor can still pass underneath the belt because the grooves allow the liquid to pass.

According to a further practical feature the vehicle further comprises at least one container to buffer material removed from the floor, in particular a first container to buffer material removed from the floor by the removing device and a second container to buffer liquid removed from the floor by the liquid removing device.

In order to remove (semi)-solid material and liquid from the stable floor it is advantageous to provide at least one container to buffer the removed material and liquid on the vehicle.

The container can buffer the material on the vehicle and as such is a temporary storage container on the vehicle and is envisaged to be emptied out. Emptying out means to remove the material from the container. This can be to a different location on the vehicle or not on the vehicle.

A single container can suffice where the picked-up material, such as manure, and removed liquid, such as urine, are destined to be processed together. The processing can take place on the vehicle when the vehicle is provided with processing means. Of course, stationary processing means to which the vehicle may then transport the material are also possible. Having a single container where the materials are collected together will not increase the emission, as long as it is closed off. Such an arrangement still provides for an efficient cleaning of the stable floor.

However, having a first container to store material removed from the floor by the material removing device and a second container to store liquid removed from the floor by the liquid removing device, is preferred.

After all the manure and urine are separately removed from the floor. Separate removal of the material and the urine and keeping the separately removed material separate, is advantageous because the thus won manure and urine can be processed as sources for valuable fertilizer ingredients. Manure contains phosphate, and thus phosphorus (P) which is a valuable ingredient for fertilizers, and urine contains nitrogen, likewise a valuable ingredient for fertilizers. By preventing the mixing of manure with urine, the manure remains a more concentrated source of phosphate then when mixing occurs. Note that some mixing of manure and urine cannot be prevented, after all the animals discharge both products indiscriminately onto the floor.

According to an embodiment the vehicle containing the solid-liquid separator also includes a sludge container to receive the sludge from the separator. By providing a sludge container the sludge can be retained on the vehicle, e.g. to be processed on the vehicle. But it can also be retained in the sludge container and unloaded from the vehicle at a vehicle docking station.

According to an embodiment the vehicle is further provided with a bedding material distribution device, in particular a pair of counter rotatable toothed rollers, to distribute bedding material over an area of the stable.

By providing the vehicle with a bedding material distribution device, it is more versatile. Such a vehicle would be particularly suitable to operate in a stable housing dairy animals, because dairy animals need to lie down in order to ruminate. The stable for dairy animals is therefor generally provided with resting areas for the animals, such as cubicles or a larger area for more animals. The cubicles or resting area need then be provided with a bedding on which the animal can lie comfortably. One way of providing a bedding is to provide loose material, such as sawdust, wood shavings, chopped straw, flax bedding material and manure fibers such as pressed manure. Since the vehicle will move through the stable floor in order to clean it, it will also move by the resting area, in particular it will move along rows of cubicles. It is then advantageous to provide the vehicle with a double function, i.e. cleaning the floor and providing bedding material for the resting area and/or cubicles.

According to an embodiment the bedding material distribution device receives manure fiber from the solid-liquid separator.

By arranging the bedding material distribution device to receive the manure fiber from the separator this manure fiber can be used as bedding material. This renders the cleaning process very efficient, because the manure is picked-up from the floor and pressed out into manure fiber which is re-used without it needing to leave the stable, since it can be used immediately in the cubicles.

According to an embodiment of the invention the liquid removing device comprises vacuum pump to create a reduced pressure within the container and a liquid intake mouth connected to the container to remove liquid from the floor.

Although other means to remove liquid are possible, advantageously a suction device is used. Such devices are relatively easy to make and provide excellent liquid removal. By realizing a reduced pressure in the tank, such as e.g. between 0,06 and 0,1 bar, there is a pressure difference between the pressure in the tank and the environment suffices which is sufficient to suck the urine into the tank.

According to an embodiment, the liquid intake mouth includes an inlet-opening in a bottom wall of the container, a floor scraping element and a front element, wherein when viewed in the intended direction of travel the inlet-opening is in front of the floor scraping element and behind the front element, and wherein the floor scraping element and the front element together surround the inlet-opening and form a liquid buffer chamber underneath the inlet opening, and wherein the front element includes a liquid passage allowing liquid to enter the buffer chamber.

By having the liquid intake mouth having a floor scraping element and a front element surrounding an inlet opening in the container, a buffer chamber is formed and the urine can enter the liquid buffer chamber by passing through the liquid passage. Preferably the liquid passage is realized by mounting the front element at a height from the floor allowing the liquid to pass underneath the front element when the vehicle moves in the intended direction. Once inside the buffer chamber the urine is sucked into the tank. The front element is at a height from the floor which allows the urine to pass underneath it. Note that preferably it is the bottom end of the front element that is positioned at a height from the floor, however a liquid passage at the lower end of the front element is also possible .

Since the material removing device of the vehicle first encounters and removes the (semi) solid materials, the height to the floor of the front element can with benefit be chosen to be the optimal height for the configuration of the machine. After all the front element need not act as a guard to prevent (semi) solid material from entering the liquid removing device. Such an optimal height can be chosen by taking into account the suction power, e.g. higher suction power allows a bigger maximum height to the floor. Note that a little bit of pollution of the liquid by solids is not seen as a problem. Especially in a stable, and when removing animal waste, the liquid will hardly ever be pure urine.

When the front element is positioned at a low height to the floor, e.g. just enough to allow the liquid to pass underneath is, it will act as a wall allowing urine to build-up in front of it. Thus the urine in front of the front element together with the front element, prevents air to be sucked into the buffer chamber thus the energy is efficiently used to transport liquid with low air flow. The machine thus consumes less energy and also produces less noise.

In a practical embodiment the material loading end comprises the front element.

The material loading element will then comprise the necessary functionality of the front element. Thus either the liquid passage or the predetermined height of the material loading end will allow the liquid to enter the liquid buffer chamber. At the same time the material loading will act as a wall allowing liquid or even (semi) solid materials to build-up and thus preventing air to be sucked into the liquid buffer chamber.

By providing a material loading element which comprises the front element of the liquid intake mouth, the machine can be made very compact which is advantageous for cleaning corners.

In an embodiment the tank is the second container, i.e. the container dedicated to receive liquid removed from the floor by the liquid removing device. It is technically easier when operating with a suction device to provide a dedicated container in which the reduced pressure is provided.

According to an embodiment the vehicle further includes a fluid dispensing device to dispense fluid onto the stable floor, the fluid dispensing device comprising a fluid container, fluid dispensing nozzle and a fluid dispensing pump to transport the fluid from the container to the nozzle.

By providing the vehicle with a fluid dispensing means to dispense fluid onto the stable floor, the vehicle becomes more versatile. For example water may be loaded onto the vehicle and dispensed to wash the floor, thus obviating the need of a separate floor washing installation. The water may be mixed with detergents or other ingredients or additives which may be useful in an animal housing.

As with the term liquid, the term fluid is meant to describe fluids which when entered into a container will, flow out and take on the shape of the container and present a level surface. Note however, that the term fluid is used to distinguish from the term liquid. Liquid being the liquid removed from the stable floor. The fluid being fluid loaded on the vehicle in order to be dispensed to the floor. Thus even though the fluid and the liquid may both be include water the terms do not denote the same. When the term fluid is used, the water will be water loaded on the vehicle and to be dispensed to wash the floor. When the term liquid is used, the water will be present on the stable floor to removed by the liquid removing device.

According to an embodiment the vehicle further comprises a controller to autonomously control the operation of the manure removing device and the liquid removing device.

By providing a controller to autonomously control the manure removing device and the liquid removing device, the vehicle becomes semi-autonomous in the sense that it is not yet an unmanned vehicle. By automatically controlling the devices on the vehicle, a driver need not worry about controlling these devices. The control may for example control the material removing device in relation to the vehicle speed. It can be imaged that for a certain speed of the vehicle the material removing device and/or the liquid removing device will need a certain control. Supposing the vehicle moves relatively fast, the material removing device will need to be controlled to operate faster too. In case of a conveying system when the vehicle moves faster, the conveyor will need to move faster too. In case of the liquid removal by a suction device, it can be understood that when the vehicle moves faster it may be necessary to provide a more reduced pressure in the tank to allow the liquid to be sucked into it more efficiently.

The invention will be explained in more detail below by means of some non-limiting examples and drawings, in which:
- Figure 1 is a schematic partly cut-away side view of an embodiment of the animal shed vehicle according to the invention,
- Figure 2 is a schematic partly cut-away rear view of an embodiment of the animal shed vehicle according to the invention.
- Figure 3 is a schematic partly cut-away side view of a fluid dispensing device of an embodiment of the animal shed vehicle.
- Figure 4 is a schematic partly cut-away side view of an alternative embodiment of animal shed vehicle.

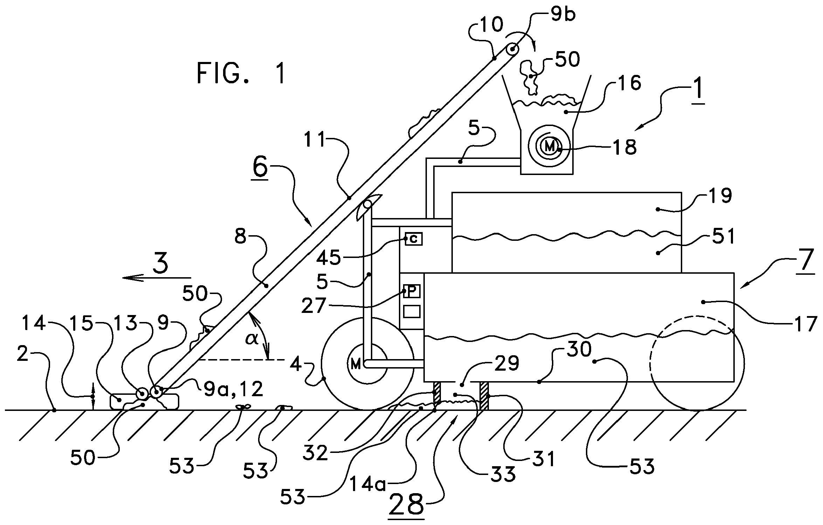

Figure 1 shows the self-propelled animal-shed vehicle 1 on a shed floor 2. Arrow 3 indicates the intended direction of travel of vehicle 1.

The vehicle is shown to include, a wheels 4, a frame 5, and a material removing device 6 and a liquid removing device 7. When viewed in the intended direction of travel 3 the material removing device is 6 is in front of the liquid removing device which is trailing behind the material removing device.

The vehicle preferably includes 3 three wheels, a pair of rear wheels and a steerable front wheel, preferably all the wheels are driven. The frame 5 is provided to mount all the parts together.

The material removing device is a driven conveyor system 8 having a material loading end 9, a material unloading end 10 and a continuous belt 11 movable about a pair of turning rollers 9a, 9b to effectuate a conveying motion from the material loading end 9 to the material unloading end 10. At the material loading end 9 a pair of counter rotation rollers 12,13 is provided at a height 14 from floor. For clarity the height is indicated by arrow 14 somewhat in front of leading end 9. The height 14 effectively forms a liquid passage allowing the liquid to pass the leading end by passing underneath it. One of the counter rotating rollers 12, is also the belt turning roller 9a. The material loading end 9 has a certain width, which preferably is the same width as the conveying device. At either side of the material loading end a support 15 is provided, which holds the material loading end at height 14 above the floor. The supports 15 preferably are shaped as elements which can slide across the stable floor while the vehicle moves in the intended direction 3. The height 14 that the material loading is from the floor is preferably at a minimum of 0,1 to 2 mm height above the floor. This minimum height guarantees that the urine can flow underneath the material loading end of the material removing device to be removed by the trailing liquid removing device.

The driven conveying system 8 is shown sloping from the material loading end 9 to the material unloading end 10 at an acute angle α. This angle chosen preferably from the range 15 to 85 degrees and depicted in figure 1 at an angle of approximately 45 degrees.

The vehicle 1 includes a first container 16 to buffer material removed from the floor by the removing device 6 and a second container 17 to buffer liquid removed from the floor by the liquid removing device 7. The material buffer container 16 is positioned adjacent the material removing device 6. In figure 1 it is shown to be adjacent en below the material unloading end 10 of the conveying system 8.

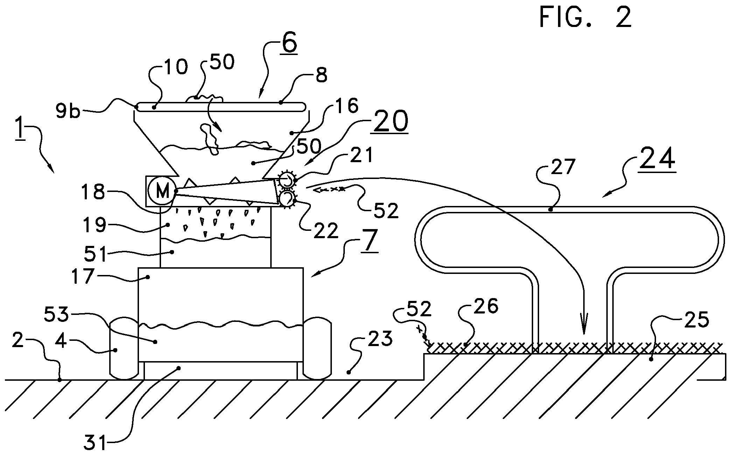

The material buffer container 16 forms the material buffer for the solid-liquid separator 18, which in this embodiment is a dewatering screw press. Two material streams exit from the press 18, sludge which falls into sludge container 19 and manure fiber which is lead to a manure fiber distribution device 20 (shown in figure 2). The manure fiber distribution device 20 is preferably a pair of counter rotatable toothed rollers 21, 22 by which manure fiber produced by the solid-liquid separator 18 can be distributed over an area of the stable, such as e.g. a resting box.

Figure 2 shows the animal shed vehicle 1 from the rear. The vehicle moves over the stable floor 2 along alley 23. The alley 23 is lined on the right side in figure 2 by a row of cubicles 24. Each cubicle includes cubicle floor 25 which is raised relative to the stable floor. Bedding material 26 is provided on the cubicle floor. The cubicles are delimited one from the other by cubicle dividers 27.

The liquid removing device 7 comprises vacuum pump 27 to create a reduced pressure within the container 17 and a liquid intake mouth 28 connected to the container to remove liquid from the floor. 14. The liquid intake mouth includes an inlet-opening 29 in a bottom wall 30 of the container 17, a floor scraping element 31 and a front element 32. As shown in figure 1, when viewed in the intended direction of travel 3 the inlet-opening 29 is in front of the floor scraping element 31 and behind the front element 32. In this manner the floor scraping element 31 and the front element 32 together surround the inlet-opening 29 and form a liquid buffer chamber 33 underneath the inlet opening 29. Also visible in figure 1 is that the front element 32 is at a height 14a from the floor 2 allowing liquid to enter the buffer chamber 33. From the buffer chamber 33 the liquid is sucked into the container 17 because of the reduced pressure in the container, produced by the pump 27.

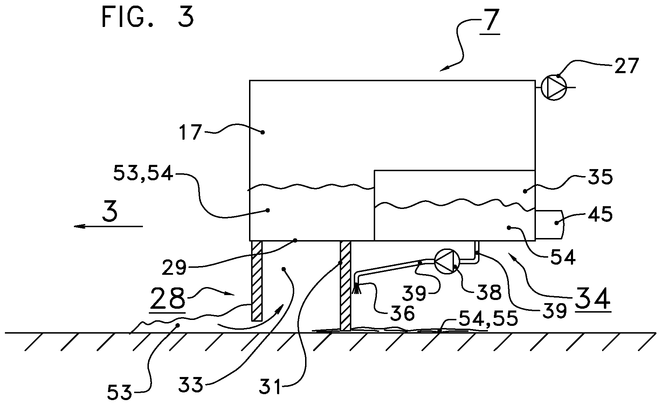

Figure 3 shows only part of the vehicle 1, which is the liquid removing device 7 and fluid dispensing device 34. The fluid dispensing device 34 is integrated in the liquid removing device, and is provided to dispense fluid onto the stable floor 2. The fluid dispensing device 34 includes a fluid container 35, a fluid dispensing nozzle 36 and a pump 38 which transports the fluid from the container 35, through line 39 to the nozzle 36.

The fluid container is shown as integrated in the liquid container 17 of the liquid removing device 6. The fluid container may contain water, or water with ingredients or additives useful in a barn. The container includes a fluid inlet (not visible in the drawings).

The vehicle includes a controller 45, which is programmed to control the various functions of the vehicle. Thus the manner in which the material such as manure is removed from the floor, conveyed and further processed by the separator. The manner in which the manure fiber is distributed into the cubicles. The controller further can control the manner in which the liquid removing device operates, e.g. by controlling the reduced pressure by controlling the pump. The controller further can control the fluid dispensing system, e.g. by controlling the pump and/or the nozzle.

The vehicle can be an autonomous vehicle, and be provided with vehicle navigation means in order for the vehicle to be able to autonomously move about through the stable and execute its tasks such removing material and liquid form the floor, processing the material into manure fiber and sludge, distributing the manure fiber, dispensing fluid onto the stable floor and the like.

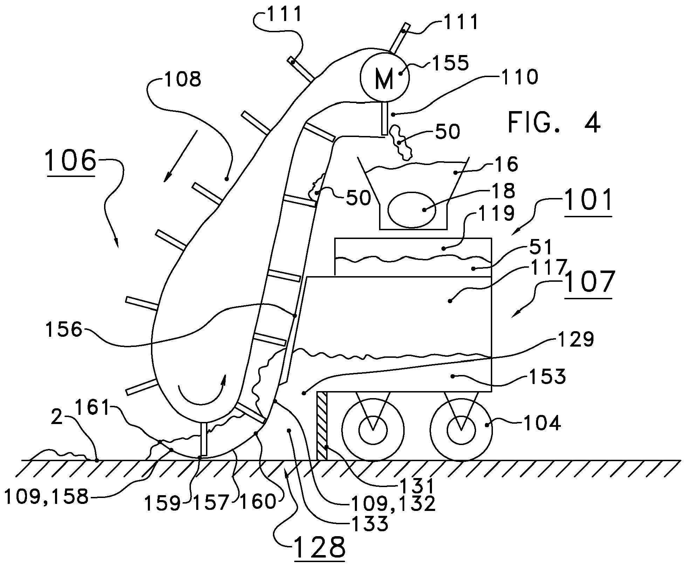

Figure 4 shows part of an alternative embodiment of the animal shed vehicle of the invention which is similar to the vehicle 1 of Figure 1 and for which corresponding reference numerals (greater by 100) are used below for describing the same parts or corresponding parts.

The vehicle 101 includes material removing device 106 as scraper conveyor system 108, which includes a material loading end 109, material unloading end 110 and an assembly of scraper blades 111 which are mounted to a pair of continuous chains (not shown). The assembly of the scraper blades is a continuous assembly, which is driven by motor 155 to rotate in a counter clockwise direction, and effectuates a conveying motion from the material loading end to the material unloading end. The blades move in a closed circuit and only interact with material 50 removed from the stable floor when moving from the loading end to the unloading end. To this end backing plate 156 is provided which plate has at least the same width as the scraper blades 111. The backing plate 156 together with the scraper blades 111 forms the path along which the manure is moved from the loading end 109 to the unloading end 110. The movement of the scraper blades 111 moves any picked-up material along the backing plate to the unloading end 110. The loading end 109 is connected to the backing plate 156 and may even be integrally formed therewith. The loading end 109 is provided with a liquid passage 157 through which the liquid 153 may pass. In this embodiment a plurality of liquid passages are provided spaced apart along the width of the material loading end. This is not visible in Figure 4 because figure 4 is a side view.

The material loading end 109 as shown is having a curved blade 158, with a bottom portion 159 touching the ground and an upward angled or curved rear wall portion 160 which is not in contact with the floor. The leading side 161 is upwardly angled in the same curve as the path of the scraper blades. This upward angled lead side 161 prevents the material loading end 109 from burrowing into the stable floor. Not visible in figure 4 is that liquid passages 157 are through slots spanning from the leading side 161 of the bottom portion to at least a portion of the rear wall portion 160. Also not visible in Figure 4 is that rear wall portion 160 includes a closed portion above the liquid passages along its width, and that slot shaped passages 157 are tapered with the narrow end in the rear wall portion. when viewed in the intended direction of travel the curved rear wall is downstream from the bottom portion and not touching the ground. Thus the liquid passages extend upward from the bottom portion 159 which is on the stable floor to allow liquid to pass through to the rear of the loading end 109.

Directly behind the loading end 109 is the liquid buffer space 133 of the liquid removing device 106. This is realized by incorporating the front element 132 of the liquid inlet mouth 128 in the material loading end 109. Thus vehicle 102 of figure 4 is much more compact than the embodiment shown in figure 1. This allows for better cleaning in corners and better maneuverability in general.

In use, the vehicle will move in the intended direction 3, encounter solid and/or semi-solid material 50, e.g. a cow dropping. As the vehicle moves forward the dropping 50 is picked-up by the counter rotating rollers 12, 13 and be disposed onto belt 11 of the conveying system 8. In the process of picking up the dropping 50 by the counter rotating rollers, the dropping is somewhat pressed-out and the dropping will better adhere to the belt 11. The pressed-out liquid falls back to the floor. The dropping 50 is conveyed to the unloading part 10 of the conveyor system 6 and is unloaded into the container 16. As can be seen in figures 1 and 2 the container 16 for receiving material (manure) from the material removing system 6, has sloping walls. The container acts as a funnel to lead the material to the separator 17. The material which is mainly manure is pressed out by the separator and yield sludge 51 and manure fiber 52. The sludge is received in the sludge container 19. The pressed out manure fiber 52 is distributed by the manure fiber distributing device 20, thus by the pair of counter rotating rollers 21, 22. Depending on the speed with which the distributing rollers rotate, the manure fiber 52 is thrown away from the vehicle. By positioning the distributing device at an angle to the vehicle and taking into account the direction in which the vehicle moves, the distributing device can be controlled to throw the manure fiber into the cubicles 24 while the vehicle passes the cubicles.

The vehicle 1 moving over the floor in the intended direction 3 will encounter liquid 53 present on the floor. Liquid in a stable will be mainly urine, but other liquids are also possible e.g. some liquid stemming from manure, or liquid from cleaning the stable with water and detergent or the like. The material removing device 6 will pass over the liquid and leave it undisturbed. Subsequently the liquid removing device 7 will encounter the liquid 53. The liquid intake mouth 28 will gather the liquid present on the floor by the action of the scraping element 31 which, preferably is shaped as a curved, flexible blade. The scraping blade 31 slides over the floor and will push liquid in front of it. The scraping element 31 trails behind the inlet opening 29 in the bottom 30 of the liquid tank 17. In front the inlet opening 29 is leading front element 32 which does not touch the floor. The liquid thus passes underneath the front element 32 and cannot pass the scraping element 31 and is thus inside the liquid buffer chamber 33 underneath the tank inlet opening 29. The liquid is subsequently sucked into the tank 17.

The tank 17 includes an outlet, which may be the same opening as the inlet opening 29, for unloading the liquid from the tank at an unloading station.

In use of vehicle 102 the manure dropping 50 is scraped of the floor by one of the scrapers 111 and then conveyed along the backing plate 156 to the unloading end 110 of vehicle 101. Any liquid passes to the rear of the loading end 109 through passages 157 where the liquid immediately is inside the liquid buffer space 133 of the liquid removing device 107.

The vehicle fluid dispensing device 34 dispenses fluid 54 onto the stable floor 3 by pumping the fluid 54 out of tank 35, through line 39 into nozzle 36.

Not shown in the figures is that belt 11 of the driven conveying system 8 may be provided with parallel grooves (57) extending in the conveying direction. The grooves thus provide a spacing between the floor and the belt in the form of channel like openings. In this manner even when the belt is in contact with the floor the liquid present on the floor may still pass underneath the belt to be removed by the trailing liquid removing device.

Instead of having the material removing device, the liquid removing device, the separator, the distributing device and the fluid dispensing device on the vehicle, the vehicle may be executed as a more simple embodiment. In the more simple embodiment the vehicle may only include the material removing device and the liquid removing device. Processing of the material may then take place in a stationary processor, the vehicle transporting the material and liquid to an unloading station from where the material and liquid are dealt with as desired.

The vehicle fluid dispensing device 34 may be controlled by controller 45 to dispense fluid onto the stable floor 3 as desired, e.g. the fluid dispensing may be continuously while the vehicle drives and removes liquid from the floor. Or maybe in dependence on sensor data, such as e.g. sensor data representing the amount of liquid being removed, the acidity of that liquid, the temperature of the liquid or the like.

The vehicle 1 may be an autonomously operating animal shed vehicle and be provided with the typical features necessary for having an animal shed vehicle operate autonomously in an animal housing. For example the vehicle may be provided, a drive and control system for driving and controlling the vehicle. Said drive and control system of the vehicle being provided with an electric drive motor and a battery system for storing electrical energy, said battery system being connected to the electric drive motor, and a regulating unit, which is provided with a transmitting and receiving device, said regulating unit being connected to the drive and control system for the regulation thereof. Also at least one charging station may be provided for the vehicle, said charging station being located in the operating area and being provided with a charging system to charge the battery system of the vehicle. Further a central operating system may be provided equipped with a transmitting and receiving device to communicate with the transmitting and receiving device of the regulating unit of the vehicle, and the central operating system being provided with a memory in which data are stored comprising navigation data, on the basis of which the vehicle is able to travel a predetermined route from a charging station through at least a part of the operating area and then back to this charging station, or possibly to a further charging station for the vehicle. And the central operating system is designed to transmit a packet of data comprising these navigation data from the transmitting and receiving device of the central operating system to the transmitting and receiving device of the regulating unit of the vehicle, and the regulating unit of the vehicle is provided with a memory for storing said packet of data, and the regulating unit of the vehicle being designed to regulate the drive and control system of the vehicle on the basis of said packet of data in order to enable the vehicle to travel along this predetermined route.

Likewise the devices on the vehicle may be controlled using the regulator device.

Of course other manners of controlling autonomous vehicles are also possible, such e.g. providing the vehicle with GPS or assisted GPS or SLAM type of controls.

The invention is not limited to the example embodiment shown in the figures but by the claims. The person skilled in the article can make various modifications which fall within the scope of the claimed invention.

## Claims

1. An unmanned, autonomous self-propelled animal-shed vehicle (1, 101) for cleaning a shed floor (2) while moving in an intended direction (3) of travel, the vehicle comprising
- a material removing device (6, 106) to remove solid and/or semi-solid material (50) from the animal-shed floor,
- a liquid removing device (7, 107) to remove liquid (53) from the animal-shed floor, and
- at least one press (18) to separate the solid and/or semi-solid material removed from the floor by the material removing device into manure fiber (52) and sludge (51),
wherein the material removing device (6, 106), when viewed in the direction of travel (3), is situated in front of the liquid removing device (7, 107).

2. The vehicle of claim 1, wherein the material removing device (6, 106) comprises a material loading end (9, 109) to pick up material from the floor (2) wherein the material loading end is provided with a liquid passage (14, 157), in particular a plurality of liquid passages spaced apart along the width of the material loading end.

3. The vehicle of claim 1 or 2, wherein the material removing device comprises a material loading end to pick up material from the floor wherein the material loading end is positioned at a predetermined height (14) from the floor.

4. The vehicle of any of the previous claims wherein the material removing device includes a driven conveyor (8, 108) system, comprising a material loading end (9, 109) and a material unloading end (10, 110), wherein the conveyor system (8, 108) is sloping from the material loading end (9,109) to the material unloading end (10, 110) at an acute angle, in particular an angle in the range 15-90 degrees, more in particular in the range 45-90 degrees.

5. The vehicle of any of the previous claims 2-4, wherein the material loading end (9,109) includes a set of counter rotatable rollers (12, 13) spaced from each other with a predetermined distance to pick up the material from the floor.

6. The vehicle of any of the claims 4 or 5, wherein the conveyor system comprises a conveyor belt (11) drivable to rotate around at a pair reversing top and bottom rollers (9a, 9b) in a conveying direction.

7. The vehicle of claim 6, wherein the conveyor belt (11) is provided with grooves (57) in the length direction of the conveying direction of the belt.

8. The vehicle according to any of the previous claims, further comprising at least one container (16, 17, 116, 117) to buffer material removed from the floor, in particular a first container (16, 116) to buffer material (50) removed from the floor by the removing device (6, 106) and a second container (17, 117) to buffer liquid removed from the floor by the liquid removing device (7, 107).

9. The vehicle according to claim 1, further comprising a sludge container (19, 119) to receive the sludge (51).

10. The vehicle according to any of the previous claims, further comprising a bedding material distribution device (20), in particular a pair of counter rotatable toothed rollers (21, 22), to distribute bedding material (26) over an area of the stable (2, 25).

11. The vehicle according to any of the previous claims, wherein the bedding material is manure fiber (52) produced by the press (18).

12. The vehicle according any of the previous claims, wherein the liquid removing device (7, 107) comprises vacuum pump (27) to create a reduced pressure within the container (17, 117) and a liquid intake mouth (28, 128) connected to the container to remove liquid from the floor.

13. The vehicle according to claim 12, wherein the container is the second container (17, 117).

14. The vehicle according to any of the previous claims, further including a fluid dispensing device (34) to dispense fluid (54) onto the stable floor (2), the fluid dispensing device (34) comprising a fluid container (35), fluid dispensing nozzle (36) and a fluid dispensing pump (38) to transport the fluid from the fluid container to the nozzle.

15. The vehicle according to any of the previous claims, further comprising a controller (45) to autonomously control the operation of the manure removing device and the liquid removing device.

## Patentansprüche

1. Unbemanntes autonomes selbstangetriebenes Tierunterkunftsfahrzeug (1, 101) zum Reinigen eines Unterkunftsbodens (2) und zugleich Bewegen in eine beabsichtigte Fahrtrichtung (3), das Fahrzeug umfassend
- eine Materialentfernungsvorrichtung (6, 106), um festes und/oder halbfestes Material (50) von dem Tierunterkunftsboden zu entfernen,
- eine Flüssigkeitsentfernungsvorrichtung (7, 107), um Flüssigkeit (53) von dem Tierunterkunftsboden zu entfernen, und
- zumindest eine Presse (18), um das durch die Materialentfernungsvorrichtung von dem Boden entfernte feste und/oder halbfeste Material in Dungfaser (52) und Schlamm (51) zu trennen,
wobei die Materialentfernungsvorrichtung (6, 106), bei Betrachtung in der Fahrtrichtung (3), vor der Flüssigkeitsentfernungsvorrichtung (7, 107) angeordnet ist.

2. Fahrzeug nach Anspruch 1, wobei die Materialentfernungsvorrichtung (6, 106) ein Materialbeladungsende (9, 109) umfasst, um Material von dem Boden (2) aufzunehmen, wobei das Materialbeladungsende mit einem Flüssigkeitsdurchlass (14, 157), genauer einer Vielzahl von Flüssigkeitsdurchlässen, die entlang der Breite des Materialbeladungsendes voneinander beabstandet sind, versehen ist.

3. Fahrzeug nach Anspruch 1 oder 2, wobei die Materialentfernungsvorrichtung ein Materialbeladungsende umfasst, um Material von dem Boden aufzunehmen, wobei das Materialbeladungsende auf einer vorbestimmten Höhe (14) von dem Boden angeordnet ist.

4. Fahrzeug nach einem der vorstehenden Ansprüche, wobei die Materialentfernungsvorrichtung ein System eines angetriebenen Fördersystem (8, 108), umfassend ein Materialbeladungsende (9, 109) und ein Materialentladungsende (10, 110), einschließt, wobei das Fördersystem (8, 108) in einem spitzen Winkel, genauer einem Winkel im Bereich von 15-90 Grad, noch genauer im Bereich von 45-90 Grad, von dem Materialbeladungsende (9, 109) zu dem Materialentladungsende (10, 110) abfällt.

5. Fahrzeug nach einem der vorstehenden Ansprüche 2-4, wobei das Materialbeladungsende (9, 109) einen Satz gegenläufig drehbarer Walzen (12, 13), die in einem vorbestimmten Abstand voneinander beabstandet sind, einschließt, um das Material von dem Boden aufzunehmen.

6. Fahrzeug nach einem der Ansprüche 4 oder 5, wobei das Fördersystem ein Förderband (11) umfasst, das antreibbar ist, um sich um ein Paar obere und untere Umkehrwalzen (9a, 9b) in einer Förderrichtung zu drehen.

7. Fahrzeug nach Anspruch 6, wobei das Förderband (11) mit Nuten (57) in der Längenrichtung der Förderrichtung des Bands versehen ist.

8. Fahrzeug nach einem der vorstehenden Ansprüche, ferner umfassend zumindest einen Behälter (16, 17, 116, 117), um von dem Boden entferntes Material zu entfernen, genauer einen ersten Behälter (16, 116), um durch die Entfernungsvorrichtung (6, 106) von dem Boden entferntes Material (50) zu puffern, und einen zweiten Behälter (17, 117), um durch die Flüssigkeitsentfernungsvorrichtung (7, 107) von dem Boden entfernte Flüssigkeit zu puffern.

9. Fahrzeug nach Anspruch 1, ferner umfassend einen Schlammbehälter (19, 119), um den Schlamm (51) aufzunehmen.

10. Fahrzeug nach einem der vorstehenden Ansprüche, ferner umfassend eine Einstreumaterialverteilungsvorrichtung (20), genauer ein Paar gegenläufig drehbarer Zahnwalzen (21, 22), um Einstreumaterial (26) über einen Bereich des Stalls (2, 25) zu verteilen.

11. Fahrzeug nach einem der vorstehenden Ansprüche, wobei das Einstreumaterial durch die Presse (18) hergestellte Dungfaser (52) ist.

12. Fahrzeug nach einem der vorstehenden Ansprüche, wobei die Flüssigkeitsentfernungsvorrichtung (7, 107) eine Vakuumpumpe (27), um einen reduzierten Druck in dem Behälter (17, 117) zu erzeugen, und eine mit dem Behälter verbundene Flüssigkeitsansaugöffnung (28, 128), um Flüssigkeit von dem Boden zu entfernen, umfasst.

13. Fahrzeug nach Anspruch 12, wobei der Behälter der zweite Behälter (17, 117) ist.

14. Fahrzeug nach einem der vorstehenden Ansprüche, ferner umfassend eine Fluidabgabevorrichtung (34), um Fluid (54) auf den Stallboden (2) abzugeben, die Fluidabgabevorrichtung (34) umfassend einen Fluidbehälter (35), eine Fluidabgabedüse (36) und eine Fluidabgabepumpe (38), um das Fluid von dem Fluidbehälter zu der Düse zu transportieren.

15. Fahrzeug nach einem der vorstehenden Ansprüche, ferner umfassend eine Steuerung (45), um den Betrieb der Dungentfernungsvorrichtung und der Flüssigkeitsentfernungsvorrichtung autonom zu steuern.

## Revendications

1. Véhicule automoteur de bâtiment d'élevage autonome sans pilote (1, 101) destiné à nettoyer le sol du bâtiment (2) tout en se déplaçant dans une direction souhaitée (3) de déplacement, le véhicule comprenant
un dispositif de retrait de matières (6, 106) pour retirer des matières solides et/ou semi-solides (50) du sol du bâtiment d'élevage,
un dispositif de retrait de liquide (7, 107) pour retirer le liquide (50) du sol du bâtiment d'élevage, et
au moins une presse (18) pour séparer les matières solides et/ou semi-solides retirées du sol par le dispositif de retrait de matières en fibres de lisier (52) et en boues (51),
dans lequel le dispositif de retrait de matières (6, 106) vu dans la direction de déplacement (3) est situé devant le dispositif de retrait de liquide (7, 107).

2. Véhicule selon la revendication 1, dans lequel le dispositif de retrait de matières (6, 106) comprend une extrémité de chargement de matières (9, 109) pour saisir les matières sur le sol (2), dans lequel l'extrémité de chargement de matières est équipée d'un passage de liquide (14, 157), en particulier une pluralité de passages de liquide espacés sur la largeur de l'extrémité de chargement de matières.

3. Véhicule selon la revendication 1 ou 2, dans lequel le dispositif de retrait de matières comprend une extrémité de chargement de matières pour saisir les matières sur le sol, dans lequel l'extrémité de chargement de matières est positionnée à une hauteur prédéterminée (14) du sol.

4. Véhicule selon l'une quelconque des revendications précédentes, dans lequel le dispositif de retrait de matières comprend un système de convoyeur mené (8, 108), comprenant une extrémité de chargement de matières (9, 109) et une extrémité de déchargement de matières (10, 110), dans lequel le système de convoyeur (8, 108) est incliné de l'extrémité de chargement de matières (9, 109) à l'extrémité de déchargement de matières (10, 110) à angle aigu, en particulier à un angle compris entre 15 et 90 degrés, plus particulièrement compris entre 45 et 90 degrés.

5. Véhicule selon l'une quelconque des revendications précédentes 2 à 4, dans lequel l'extrémité de chargement de matières (9, 109) inclut un jeu de rouleaux de contre-rotation (12, 13) espacés les uns des autres d'une distance prédéterminée pour saisir les matières sur le sol.

6. Véhicule selon l'une quelconque des revendications 4 et 5, dans lequel le système de convoyeur comprend une courroie de convoyeur (11) pouvant être entraînée pour tourner autour d'une paire de rouleaux en rotation inverse supérieur et inférieur (9a, 9b) dans une direction de convoyage.

7. Véhicule selon la revendication 6, dans lequel la courroie de convoyeur (11) est équipée de rainures (57) dans la direction de longueur de la direction de convoyage de la courroie.

8. Véhicule selon l'une quelconque des revendications précédentes, comprenant en outre au moins un conteneur (16, 17, 116, 117) pour tamponner les matières retirées du sol, en particulier un premier conteneur (16, 116) pour tamponner les matières (50) retirées du sol par le dispositif de retrait (6, 106) et un second conteneur (17, 117) pour tamponner le liquide retiré du sol par le dispositif de retrait de liquide (7, 107).

9. Véhicule selon la revendication 1, comprenant en outre un conteneur de boues (19, 119) pour recevoir les boues (51).

10. Véhicule selon l'une quelconque des revendications précédentes, comprenant en outre un dispositif de distribution de litière (20), en particulier une paire de rouleaux dentés de contre-rotation (21, 22), pour distribuer de la litière (26) sur une surface de l'étable (2, 25).

11. Véhicule selon l'une quelconque des revendications précédentes, dans lequel la litière est constituée de fibres de lisier (52) produites par la presse (18).

12. Véhicule selon l'une quelconque des revendications précédentes, dans lequel le dispositif de retrait de liquide (7, 107) comprend une pompe à vide (27) pour créer une pression réduite dans le conteneur (17, 117) et une embouchure d'entrée de liquide (28, 128) reliée au conteneur pour retirer le liquide du sol.

13. Véhicule selon la revendication 12, dans lequel le conteneur est le second conteneur (17, 117).

14. Véhicule selon l'une quelconque des revendications précédentes, comprenant en outre un dispositif de distribution de fluide (34) pour distribuer un fluide (54) sur le sol de l'étable (2), le dispositif de distribution de fluide (34) comprenant un conteneur de fluide (35), un gicleur de distribution de fluide (36) et une pompe de distribution de fluide (38) pour transporter le fluide du conteneur de fluide au gicleur.

15. Véhicule selon l'une quelconque des revendications précédentes, comprenant en outre un contrôleur (45) pour commander de façon autonome le fonctionnement du dispositif de retrait de matières et le dispositif de retrait de liquide.
